# EUROPEAN PATENT APPLICATION

(11) **EP 3 547 050 A1**
(43) Date of publication of application: **02.10.2019**
(21) Application number: 19164514.2
(22) Date of filing: 22.03.2019
(51) Int. Cl.: G05B 19/042, G06Q 10/06, G06Q 10/00

(54) **DEVICE MANAGEMENT APPARATUS, DEVICE MANAGEMENT METHOD, DEVICE MANAGEMENT PROGRAM, STORAGE MEDIUM, AND DEVICE MANAGEMENT SYSTEM**

(30) Priority: 28.03.2018 JP 2018061686
(71) Applicant: Yokogawa Electric Corporation, Tokyo 180-8750 (JP)
(72) Inventor: NOZAKA, Yuichi, Musashino-shi, Tokyo 180-8750 (JP); OKAMOTO, Hiromi, Musashino-shi, Tokyo 180-8750 (JP); NAKAGAWA, Shinya, Musashino-shi, Tokyo 180-8750 (JP)
(74) Representative: Osha Liang

(57) **Abstract**

A device management apparatus which manages at least one field device includes a communicator configured to communicate with the field device to acquire device information, the device information including identification information for identifying the field device and at least one piece of additional information set in the field device, a key generator configured to generate an identification key for identifying the device information using the identification information and the additional information included in the device information acquired by the communicator, and a storage storing the identification key generated by the key generator and the device information in association with each other.

## Description

### BACKGROUND

### Field of the Invention

The present invention relates to a device management apparatus, a device management method, a device management program, a storage medium, and a device management system.

The present application claims priority based on Japanese patent application 2018-061686, filed on March 28, 2018 and includes herein by reference the content thereof.

### Background

A distributed control system (DCS) has been constructed and an advanced automatic operation has been realized in plants, factories, and the like (hereinafter, collectively referred to as "plants"). This distributed control system is a control system in which controllers for controlling on-site devices (measuring devices, actuators) referred to as field devices are distributed and disposed for every several control loops. In a plant in which such a distributed control system is constructed, an operator regularly or irregularly performs maintenance of field devices in order to prevent abnormal operation, maintain measurement accuracy, and the like.

The maintenance of field devices is performed using a device management apparatus capable of wired communication or wireless communication with the field devices. This device management apparatus is, for example, a note-type or tablet-type computer in which a dedicated tool (an apparatus management tool) for managing field devices is installed, a personal digital assistant (PDA), a handheld terminal (HHT), or the like. Since field devices with different implemented communication protocols may be installed together in a plant, device management apparatuses compatible with various communication protocols have also been developed. The communication protocols with which device management apparatuses are compatible include, for example, HART (registered trademark), BRAIN, Foundation Fieldbus (registered trademark), ISA100.11a, Wireless HART (registered trademark), and the like.

Such a device management apparatus collectively manages a plurality of pieces of device information acquired from a plurality of field devices. In particular, the device management apparatus generates an identification key of a field device on the basis of device information acquired from the field device, and stores the generated identification key and the device information acquired from the field device in a storage in association with each other. Then, the device management apparatus collectively manages the device information stored in the storage using the identification key described above. Japanese Unexamined Patent Application, First Publication No. 2016-42386 discloses a conventional device management apparatus which performs such management.

### SUMMARY

The device information acquired from field devices includes identification information used for identifying an individual field device. The identification information mainly includes, for example, the following two items.
(1) Identification information uniquely assigned to each device at the time of product shipment
(2) Identification information assigned by a user

The identification information of (1) described above includes "device ID" set for, for example, a device (HART device) that performs HART (registration information) communication. The identification information of (2) described above includes "tag information" set for, for example, a device (BRAIN device) that performs BRAIN communication.

The device management apparatus generates an identification key such as that described above using the identification information included in such device information. For example, when the device that is a target of management is a HART device, the device management apparatus generates a device ID obtained from the HART device as an identification key as it is. When the device that is a target of management is a BRAIN device, the device management apparatus generates information including tag information obtained from the BRAIN device (for example, tag information and information indicating a model name of the device) as the identification key.

Since the identification information of (1) described above is uniquely assigned to each device at the time of product shipment, identification keys generated using this identification information do not overlap. However, since the identification information of (2) described above is arbitrarily assigned by a user, identification keys generated using this identification information can overlap. For example, when an operation is performed such that the same device tag is set for field devices installed in different plants, and these field devices are individually controlled for each plant, the identification keys can overlap.

Even if the identification keys of different field devices overlap when the operation described above is performed, problems do not occur in performing control in each plant. However, for example, if the identification keys of different field devices overlap when a user collectively manages all the field devices of different plants, there are some cases in which the device information of field devices to which the same device tag is set is mixed and it is not possible to collectively manage device information using the identification keys.

One aspect of the present invention provides a device management apparatus, a device management method, a device management program, a storage medium, and a device management system which can individually manage device information obtained from each field device even when the same identification information is assigned to different field devices.

A device management apparatus according to a first aspect of the present invention which manages at least one field device may include a communicator configured to communicate with the field device to acquire device information, the device information including identification information for identifying the field device and at least one piece of additional information set in the field device, a key generator configured to generate an identification key for identifying the device information using the identification information and the additional information included in the device information acquired by the communicator, and a storage storing the identification key generated by the key generator and the device information in association with each other.

The above-described device management apparatus may further include a manager configured to manage the device information stored in the storage using the identification key.

The above-described device management apparatus may an operator operable by a user. The key generator may be configured to generate the identification key using the additional information specified based on operation performed by the user on the operator among the additional information included in the device information.

In the above-described device management apparatus, the key generator may be configured to display on a display a list of the additional information usable for generation of the identification key among the additional information included in the device information, and generate the identification key using the additional information specified from the list based on the operation performed by the user on the operator.

In the above-described device management apparatus, the key generator may be configured to automatically specify the additional information used in the generation of the identification key among the additional information included in the device information.

In the above-described device management apparatus, the identification information may include tag information arbitrarily set by a user. The additional information may include plant information on a plant in which the field device is installed.

In the above-described device management apparatus, the tag information may include information for uniquely identifying each of a plurality of field devices installed in a single plant.

In the above-described device management apparatus, the plant information may include at least one of first information for specifying a plant in which the field device is installed and second information for indicating a location of the plant in which the field device is installed.

In the above-described device management apparatus, the key generator may be configured to determine whether the identification information included in the device information is information for uniquely identifying each of a plurality of field devices, generate the identification key which is the identification information in a case in which the identification information is information for uniquely identifying each of the plurality of field devices, and generate the identification key using the identification information and the additional information in a case in which the identification information is not information for uniquely identifying each of the plurality of field devices

In the above-described device management apparatus, the key generator may be configured to generate the identification key using the identification information and a plurality of pieces of additional information.

In the above-described device management apparatus, the key generator may be configured to generate the identification key which is the identification information in a case in which a field device for performing communication using a first communication protocol is identified, and generate the identification key using the identification information and the additional information in a case in which a field device for performing communication using a second communication protocol is identified.

A device management method according to a second aspect of the present invention which manages at least one field device may include communicating with the field device to acquire device information, the device information including identification information for identifying the field device and at least one piece of additional information set in the field device, generating an identification key for identifying the device information using the identification information and the additional information included in the acquired device information, and storing the generated identification key and the device information in association with each other.

A device management program according to a third aspect of the present invention which manages at least one field device, which when executed by a computer, may cause the computer to perform communicating with the field device to acquire device information, the device information including identification information for identifying the field device and at least one piece of additional information set in the field device, generating an identification key for identifying the device information using the identification information and the additional information included in the acquired device information, and storing the generated identification key and the device information in association with each other.

A storage medium according to a fourth aspect of the present invention may store the above-described device management program.

A device management system according to a fifth aspect of the present invention may include a plurality of field devices, and the above-described device management apparatus which manages the plurality of field devices.

In the above-described device management apparatus, the device management apparatus may manage a plurality of field devices installed in different plants.

The above-described device management apparatus may further include an acquirer configured to acquire first identification information associated with a first field device from a server which centrally manages identification information used to uniquely identify a plurality of field devices and set the acquired first identification information in the first field device as the additional information.

In the above-described device management apparatus, the communicator may be configured to communicate with the first field device to acquire additional information set by the acquirer. The key generator may be configured to generate the identification key using the additional information acquired by the communicator from the first field device.

According to the one aspect of the present invention, it is possible to generate an identification key uniquely defined even if the same identification information is assigned to different field devices, and thereby device information obtained from each field device can be individually managed.

### BRIEF DESCRIPTION OF THE DRAWINGS

FIG. 1 is a diagram which shows a device management apparatus according to a first embodiment of the present invention.
FIG. 2 is a block diagram which shows a configuration of main parts of the device management apparatus according to the first embodiment of the present invention.
FIG. 3 is a flowchart which shows an overview of a device management method according to the first embodiment of the present invention.
FIG. 4 is a diagram for describing an example of the device management method according to the first embodiment of the present invention.
FIG. 5 is a diagram for describing another example of the device management method according to the first embodiment of the present invention.
FIG. 6 is a block diagram which shows a configuration of main parts of a device management apparatus according to a second embodiment of the present invention.
FIG. 7 is a diagram for describing an example of the device management method according to the second embodiment of the present invention.
FIG. 8 is a flowchart which shows an overview of a device management method according to the second embodiment of the present invention.

### DETAILED DESCRIPTION OF THE INVENTION

Hereinafter, a device management apparatus, a device management method, a device management program, a storage medium, and a device management system according to embodiments of the present invention will be described in detail with reference to drawings.

### [First embodiment]

### (Device management apparatus)

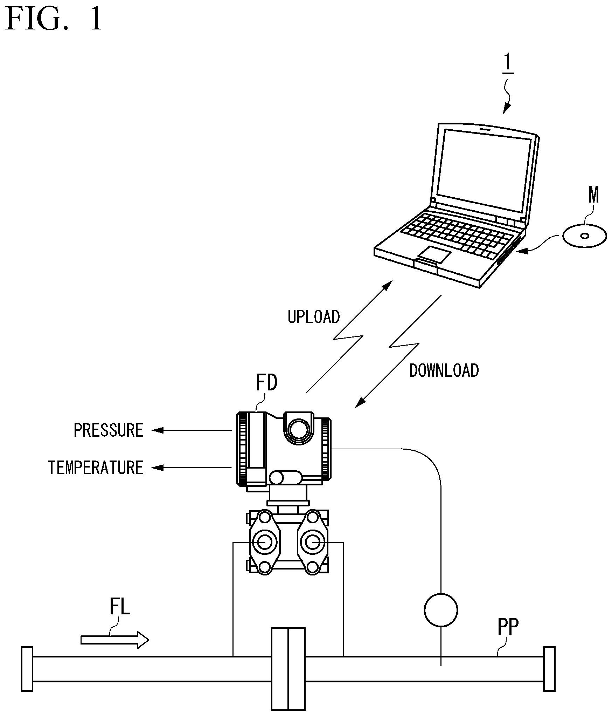

FIG. 1 is a diagram which shows a device management apparatus according to a first embodiment of the present invention. As shown in FIG. 1, a device management apparatus 1 of the present embodiment is connected to a field device FD as a target to be managed, and performs management of the field device FD by communicating with the field device FD. The connection form between the device management apparatus 1 and the field device FD is arbitrary, and it may be, for example, a wired connection or a wireless connection.

The field device FD is, for example, a sensor such as a pressure gauge, a flow meter, or a temperature sensor, a valve such as a flow control valve or an opening and closing valve, an actuator such as a fan or motor, an imaging device such as a camera or a video camera that images a situation inside a plant or a target, a sound device such as a microphone or a speaker that collects abnormal sounds or the like in a plant or issues an alarm sound or the like, a position detection device that outputs positional information of each apparatus, or other devices. In the present embodiment, it is assumed that the field device FD is a differential pressure/pressure transmitter for measuring a differential pressure and a pressure of a fluid FL flowing through a pipe PP.

The field device FD performs communication using any one of industrial communication protocols. The field device FD performs communication using any one of communication protocols defined by, for example, HART (registered trademark), BRAIN, Foundation Fieldbus (registered trademark), ISA100.11a, Wireless HART (registered trademark), and the like. In the present embodiment, it is assumed that the field device FD is an apparatus (BRAIN device) that performs communication using a communication protocol defined by BRAIN.

Plants in which such a field device FD is installed include a plant which manages and controls a well source such as a gas field or an oilfield, and the periphery, a plant which manages and controls power generation of hydraulic power, thermal power, and nuclear power, a plant which manages and controls environmental power generation such as sunlight and wind power, a plant which manages and controls water and sewage, or dams, and the like, in addition to a plant such as a chemical plant (for example, an industrial plant). Note that plants in which such a field device FD is installed are not limited to these plants.

The device management apparatus 1 performs wired communication or wireless communication with the field device FD, and performs management of the field device FD by exchanging various types of information with the field device FD. For example, the device management apparatus 1 ascertains a current measurement condition by acquiring a parameter set in the field device FD, and performs change and the like of the measurement condition by setting a new parameter in the field device FD. The device management apparatus 1 causes the field device FD to execute an adjustment, causes the field device FD to execute a test, causes the field device FD to execute a diagnosis, and performs monitoring by acquiring a result of each execution. The device management apparatus 1 is used by a person (user) who operates the device management apparatus 1. The user may be, for example, a worker who performs on-site work of a plant, a manager of a plant, a manufacturer of a device management apparatus, or the like.

The device management apparatus 1 can perform communication using a plurality of industrial communication protocols. For example, the device management apparatus 1 can perform communication using a communication protocol defined by, for example, HART (registered trademark), BRAIN, Foundation Fieldbus (registered trademark), ISA100.11a, and the like which are described above. In this manner, the device management apparatus 1 corresponds to a plurality of communication protocols, and thereby the device management apparatus 1 can collectively manage the field device FD in which different communication protocols are implemented.

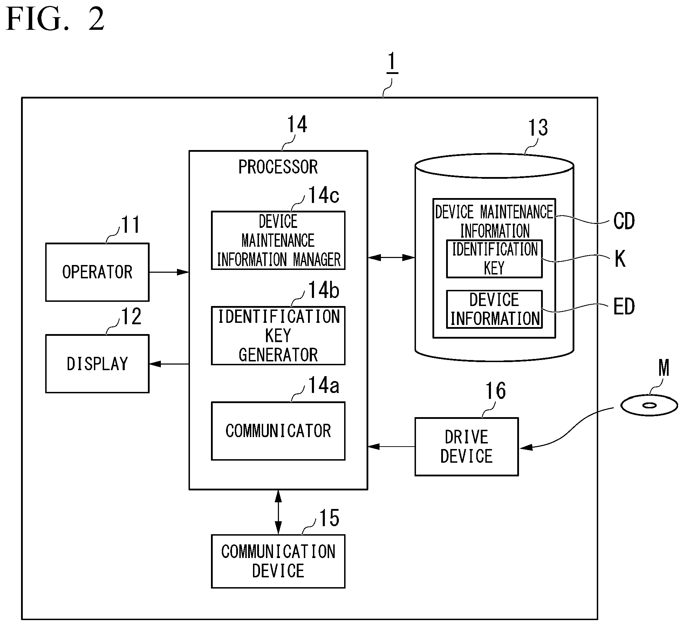

FIG. 2 is a block diagram which shows a configuration of main parts of the device management apparatus according to the first embodiment of the present invention. As shown in FIG. 2, the device management apparatus 1 includes an operator 11, a display 12, a storage 13 (storage means), a processor 14, a communication device 15, and a drive device 16. Such a device management apparatus 1 is realized by, for example, a note-type or tablet-type computer, or the like. Although the details will be described below, a function of the device management apparatus 1 (a function of managing the field device FD) is realized in a software manner by reading and installing a program recorded in a storage medium M.

The operator 11 includes, for example, an input device such as a keyboard or a pointing device. The operator 11 outputs an instruction (an instruction to the device management apparatus 1) in accordance with an operation of an operator using the device management apparatus 1 to the processor 14. The display 12 includes, for example, a display device such as a liquid crystal display device. The display 12 displays various types of information output from the processor 14. The operator 11 and the display 12 may be physically separated, and may also be physically integrated as a liquid crystal display device of a touch panel type having both a display function and an operation function.

The storage 13 includes, for example, an auxiliary storage device such as a hard disk drive (HDD) or a solid state drive (SSD). The storage 13 stores various types of data. For example, the storage 13 stores device maintenance information CD that is information used for maintenance of a field device FD. The device maintenance information CD is information in which device information ED acquired from the field device FD and an identification key K for identifying the device information ED and the like are associated with each other. Details of the device maintenance information CD will be described below. In addition, although not shown in FIG. 2, for example, various types of programs executed by the device management apparatus 1 are stored in the storage 13.

The processor 14 collectively controls an operation of the device management apparatus 1 on the basis of an operation instruction input from the operator 11. For example, when an acquisition instruction of a parameter set in the field device FD is input, the processor 14 communicates with the field device FD by controlling the communication device 15 and acquires a parameter set in the field device FD. When a setting instruction of a parameter to the field device FD is input, the processor 14 communicates with the field device FD by controlling the communication device 15 and sets a new parameter instructed by an operation instruction input from the operator 11 in the field device FD.

The processor 14 includes a communicator 14a (a communication means), an identification key generator 14b (a key generator or a key generation means), and a device maintenance information manager 14c (a manager). The communicator 14a communicates with the field device FD by controlling the communication device 15. The communicator 14a communicates with the field device FD, and acquires device information ED stored in the field device FD. Although the details will be described below, the device information ED includes identification information for identifying the field device FD (for example, a device ID or tag information), and at least one piece of additional information (memo parameter) set in the field device FD.

In the communicator 14a, the plurality of industrial communication protocols described above (HART (registered trademark), BRAIN, Foundation Fieldbus (registered trademark), ISA100.11a, and the like) are implemented. The communicator 14a communicates with a field device FD using, for example, a communication protocol instructed from the operator 11. Alternatively, the communicator 14a automatically determines a communication protocol used in a connected field device FD, and communicates with the field device FD using the communication protocol which is automatically determined.

The identification key generator 14b generates an identification key K using the device information ED acquired from the field device FD. In particular, when identification information included in the device information ED is a device ID (for example, when the field device FD is a HART device), the identification key generator 14b generates the identification key K which is the device ID. On the other hand, when identification information included in the device information ED is tag information (for example, when the field device FD is a BRAIN device), the identification key generator 14b generates the identification key K using tag information and the memo parameter described above. In this manner, when identification information included in the device information ED is tag information, the identification key generator 14b generates the identification key K using the tag information and the memo parameter, and it makes it possible to individually manage the device information ED obtained from each field device FD even if there are a plurality of field devices FD to which the same tag information is assigned.

The tag information is identification information arbitrarily assigned by a user. In general, the tag information is assigned such that each field device is uniquely identified. That is, different pieces of tag information are assigned to different field devices. However, it is also possible to assign the same tag information to different field devices. For example, different tag information are assigned to field devices installed in the same plant to uniquely identify each of the field devices. On the other hand, the same tag information is assigned to field devices installed in different plants. For example, there is a case in which a tag "PT1001" is assigned to one field device of "plant 1," and the same tag "PT1001" is assigned to one field device of "plant 2."

A plurality of memo parameters may be included in the device information ED acquired from the field device FD. When the plurality of memo parameters are included in this manner, it is possible to generate the identification key K using all the memo parameters or to generate the identification key K using some of the memo parameters. Methods of specifying a memo parameter used in the generation of the identification key K to the identification key generator 14b include, for example, the following three methods.

### (1) Direct specification method by user

The direct specification method specifies a memo parameter specified by an operation of the operator 11 by a user among memo parameters included in the device information ED. Since a type of memo content set for a memo parameter is arbitrarily determined by a user, it is possible to specify a memo parameter operated in accordance with an operation mode of a memo parameter of a user and specified.

### (2) Selection specification method using list

The selection specification method is a method in which the identification key generator 14b displays on the display 12 a list of memo parameters usable for the generation of the identification key K among the memo parameters included in the device information ED and specifies a memo parameter specified (selected) from the list by an operation of the operator 11 by a user. A format of the list may be a format that lists memo parameters, a tabular format, or the like. Thereby, a user can operate and specify a memo parameter while looking at the list of memo parameters, and thus a specification operation becomes easier.

### (3) Automatic specification method

The automatic specification method is a method in which the identification key generator 14b automatically specifies a memo parameter used for the generation of the identification key K among the memo parameters included in the device information ED. The method of automatically specifying a memo parameter includes, for example, a method of specifying a memo parameter read from the field device FD at the very beginning among the memo parameters included in the device information ED. This is merely an example, and the method of specifying a memo parameter is arbitrary. In this manner, it is possible to automatically specify a memo parameter without a user performing an operation on the operator 11.

The device maintenance information manager 14c manages the device maintenance information CD stored in the storage 13 using the identification key K described above. For example, the device maintenance information manager 14c performs management such as management for newly registering acquired device information ED and the like in the storage 13, and management for updating device information ED and the like which have been already stored. When the field device FD is, for example, a BRAIN device, the identification key K is generated using tag information and a memo parameter. For this reason, even if there are a plurality of BRAIN devices to which the same tag information is assigned, there are different identification keys K generated to manage the device information ED and the like obtained from each of the BRAIN devices. Therefore, the device maintenance information manager 14c can individually manage the device maintenance information CD including the device information ED acquired from the BRAIN devices to which the same tag information is assigned using the identification key K. Details of processing performed by the processor 14 will be described below.

The communication device 15 communicates with a connected field device FD under control of the communicator 14a. The communication device 15 may perform wired communication or may perform wireless communication. The drive device 16 reads data recorded on, for example, a computer-readable storage medium M such as a CD-ROM or a DVD (registered trademark)-ROM. This storage medium M stores a program for realizing a function of each block of the device management apparatus 1 (for example, a function of the processor 14).

The program stored in such a storage medium M is read by the drive device 16, and installed in the device management apparatus 1, and thereby the function of each block of the device management apparatus 1 is realized in a software manner. In other words, these functions are realized by software and hardware resources in cooperation. The program for realizing the function of each block of the device management apparatus 1 may be distributed in a state in which it is recorded in the storage medium M, and may also be distributed via an external network such as the Internet.

When the device management apparatus 1 does not include the drive device 16, it acquires the program via an external network such as the Internet. In particular, the device management apparatus 1, for example, stores the program acquired via an external network by the communication device 15 in the storage 13. In addition, a manufacturer and the like of the device management apparatus 1 can store the program for realizing the function of each block in the storage 13 as a pre-installed version of the device management apparatus 1 in advance.

### (Device management method)

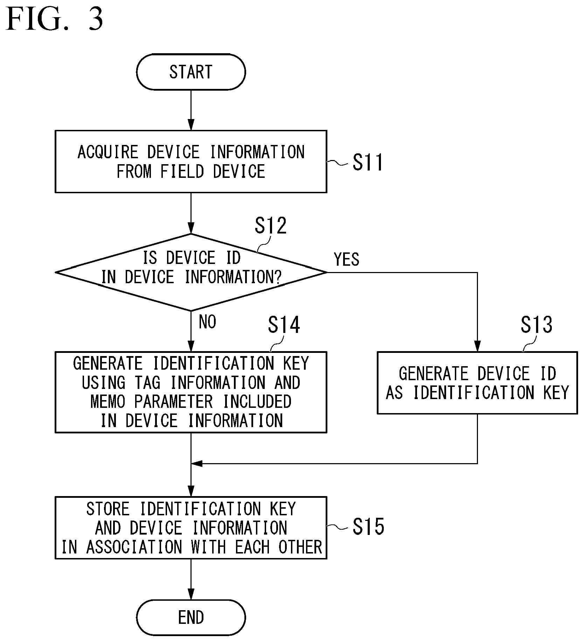

FIG. 3 is a flowchart which shows an overview of a device management method according to the first embodiment of the present invention. Processing of the flowchart shown in FIG. 3 is started by, for example, an operator who operates the device management apparatus 1 operating the operator 11 and giving an acquisition instruction of the device information ED stored in the field device FD.

When the processing is started, first, communication between the device management apparatus 1 and the field device FD is performed, and processing of acquiring the device information ED stored in the field device FD is performed by the device management apparatus 1 (step S11: a communication step). In particular, the communication device 15 of the device management apparatus 1 is controlled by the communicator 14a provided in the processor 14 of the device management apparatus 1, and thereby the communication between the device management apparatus 1 and the field device FD is performed, and the processing of acquiring the device information ED stored in the field device FD is performed under the control of the communicator 14a.

Next, the identification key generator 14b performs processing of determining whether a device ID is included in device information acquired from the field device FD (step S12). When it is determined that a device ID is included in device information acquired from the field device FD (when a determination result of step S12 is "YES"), the identification key generator 14b performs processing of generating the device ID included in the device information as an identification key K (step S13). When a field device FD is, for example, a HART device (a field device which performs communication using a first communication protocol), the determination result of step S12 is "YES," and the processing of step S13 is performed.

On the other hand, when it is determined that a device ID is not included in device information acquired from the field device FD (when the determination result of step S12 is "NO"), the identification key generator 14b performs processing of generating an identification key K using tag information and a memo parameter included in the device information (step S14: a key generation step). When the field device FD is, for example, a BRAIN device (a field device which performs communication using a second communication protocol), the determination result of step S12 is "NO," and the processing of step S 14 is performed.

If the processing of step S13 or the processing of step S14 ends, the identification key generator 14b performs processing of storing a generated identification key K and device information ED acquired from the field device FD in association with each other in the storage 13 as device maintenance information CD (step S15: a storage step). With the above processing, the series of processing shown in FIG. 3 is completed. The device maintenance information CD stored in the storage 13 is managed by the device maintenance information manager 14c provided in the processor 14 using the identification key K described above.

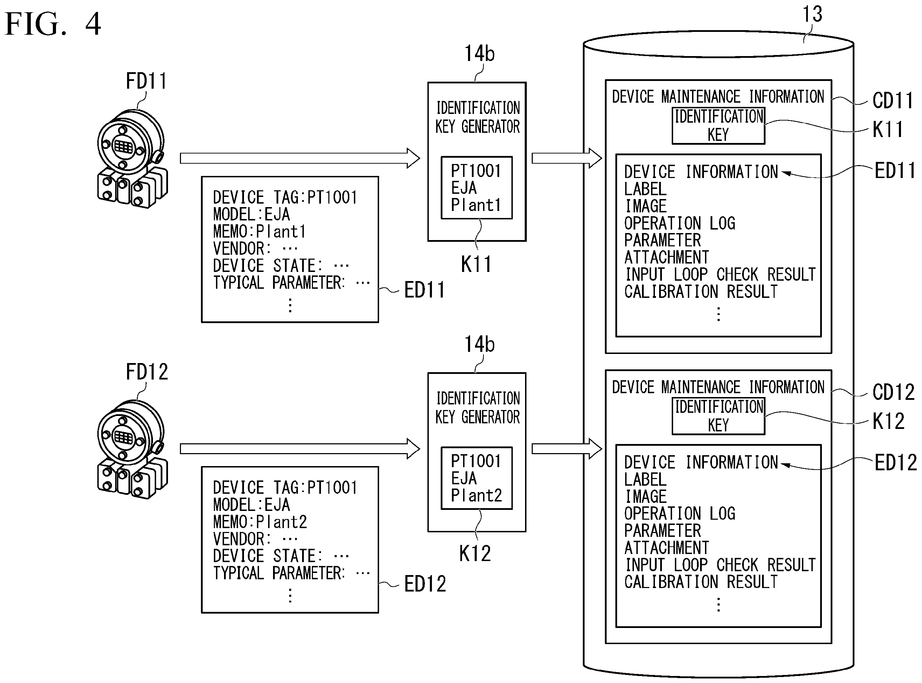

FIG. 4 is a diagram for describing an example of the device management method according to the first embodiment of the present invention. The example shown in FIG. 4 is an example of managing device information ED11 and ED12 acquired from two field devices FD11 and FD12 in which the same device tag "PT1001" is set and whose models are both "EJA." As shown in FIG. 4, information (plant information, first information) for specifying a plant in which the field devices are installed is set in the field devices FD11 and FD12. In particular, a memo parameter of "Plant1" is set in the field device FD11 and a memo parameter of "Plant2" is set in the field device FD12 as a memo parameter (MEMO). The device information ED11 and ED12 acquired from the field devices FD11 and FD12 includes a vendor, a device state, a typical parameter, and the like in addition to a device tag, a model, and a memo parameter. The device state includes a result of self-diagnosis executed by a field device FD, and the like, and typical parameters include parameters common to sensor apparatuses such as a pressure gauge or a flow meter and the like.

As shown in FIG. 4, when the device information ED11 stored in the field device FD11 is acquired by the device management apparatus 1, the identification key generator 14b of the device management apparatus 1 performs processing of generating an identification key K11 using the device tag "PT1001," the model "EJA," and the memo parameter "Plant1." Then, the generated identification key K11 is associated with the device information ED11 and accompanying information (labels, images, operation logs, parameters, attachments, input look check results, calibration results, and the like) to be stored in the storage 13 as device maintenance information CD11.

As shown in FIG. 4, when the device information ED12 stored in the field device FD12 is acquired by the device management apparatus 1, the identification key generator 14b of the device management apparatus 1 performs processing of generating an identification key K12 using the device tag "PT1001," the model "EJA," and the memo parameter "Plant2." Then, the generated identification key K12, the device information ED12, and the accompanying information described above are associated with one another, and stored in the storage 13 as device maintenance information CD12.

The device maintenance information CD11 is managed using the identification key K11 generated using the device tag "Pt1001," the model "EJA," and the memo parameter "Plant1," and the device maintenance information CD12 is managed using the identification key K12 generated using the device tag "PT1001," the model "EJA," and the memo parameter "Plant2." For this reason, even if the same device tag "PT1001" is set for the field devices FD11 and FD12, and the field devices have the same model "EJA," it is possible to individually manage the device information ED11 and ED12 obtained from the field devices FD11 and FD12 using the different identification keys K11 and K12.

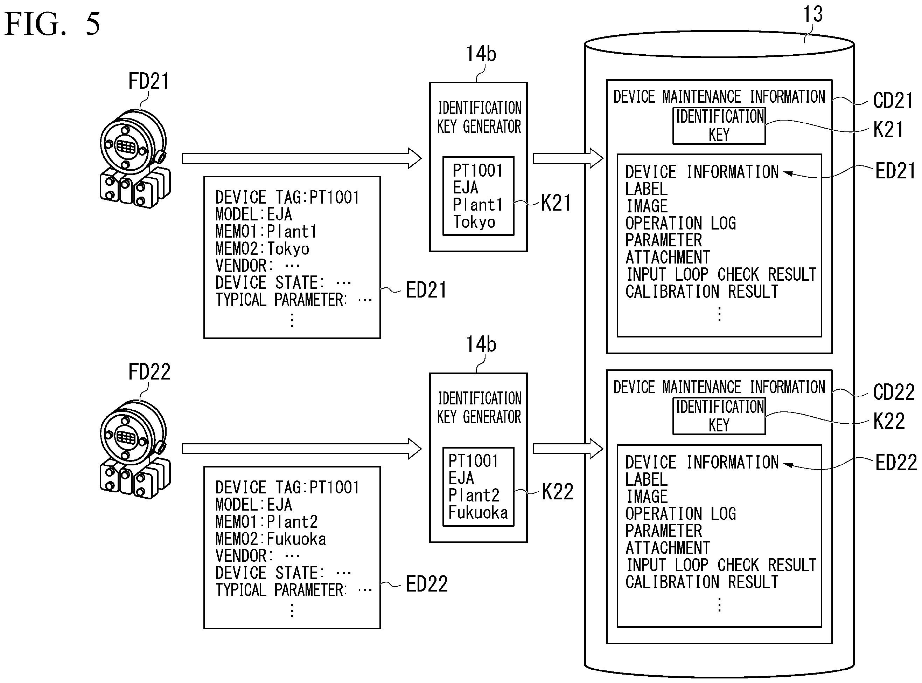

FIG. 5 is a diagram for describing another example of the device management method according to the first embodiment of the present invention. The example shown in FIG. 5 is an example in which the same device tag "PT1001" is set in the same manner as in the example shown in FIG. 4, and device information ED21 and ED22 acquired from two field devices FD21 and FD22 having the same model of "EJA" are managed. However, in the present example, as shown in FIG. 5, information for specifying a plant in which the field devices are installed (for example, a plant name: plant information, first information) and information for indicating the location of a plant in which the field devices are installed (for example, a city name in which the plant is located: plant information, second information) are set as memo parameters (MEMO1 and MEMO2) in the field devices FD21 and FD22.

In particular, a memo parameter of "Plant1" (MEMO1) and a memo parameter of "Tokyo" (MEMO2) are set in the field device FD21, and a memo parameter of "Plant2" (MEMO1) and a memo parameter of "Fukuoka" (MEMO2) are set in the field device FD22. The device information ED21 and ED22 acquired from the field devices FD21 and FD22 includes a vender, a device state, a typical parameter, and the like in addition to a device tag, a model, and a memo parameter.

As shown in FIG. 5, when the device information ED21 stored in the field device FD21 is acquired by the device management apparatus 1, the identification key generator 14b of the device management apparatus 1 performs processing of generating an identification key K21 using the device tag "PT1001," the model "EJA," and the memo parameters "Plant1," "Tokyo." Then, the generated identification key K21 is associated with the device information ED21 and the accompanying information described above to be stored in the storage 13 as device maintenance information CD21.

As shown in FIG. 5, the device information ED22 stored in the field device FD22 is acquired by the device management apparatus 1, the identification key generator 14b of the device management apparatus 1 performs processing of generating an identification key K22 using the device tag "PT1001," the model "EJA," and the memo parameters "Plant2," "Fukuoka." Then, the generated identification key K22 is associated with the device information ED22 and the accompanying information described above to be stored in the storage 13 as device maintenance information CD22.

The device maintenance information CD21 is managed using the identification key K21 generated using the device tag "PT1001," the model "EJA," and the memo parameters "Plant1," "Tokyo," and the device maintenance information CD22 is managed using the identification key K22 generated using the device tag "PT1001," the model "EJA," and the memo parameters "Plant2," "Fukuoka." For this reason, even if the same device tag "PT1001" is set in the field devices FD21 and FD22, and the models are the same as "EJA," the device information ED21 and ED22 obtained from the field devices FD21 and FD22 can be individually managed using different identification keys K21 and K22.

In the example shown in FIG. 4, information (first information) for specifying a plant in which the field devices FD11 and FD12 are installed is set as a memo parameter, and the identification keys K11 and K12 are generated using this memo parameter. In the example shown in FIG. 5, the information (the first information) for specifying a plant in which the field devices FD21 and FD22 are installed and information (second information) for indicating the location of the plant are set as memo parameters, and the identification keys K21 and K22 are generated using these memo parameters. As another example, the information (the second information) for indicating the location of a plant in which a field device is installed may be set as a memo parameter, and an identification key may be generated using this memo parameter.

As described above, the device information ED including the tag information for identifying the field device FD and at least one memo parameter set in the field device FD is acquired by communicating with the field device FD, the identification key K for identifying the device information ED is generated using the tag information and the memo parameter included in the acquired device information ED, and the generated identification key K and the device information ED are stored in association with each other in the present embodiment. For this reason, even if the same tag information is assigned to different field devices FD, it is possible to generate a uniquely defined identification key, and to individually manage the device information ED obtained from each field device FD.

For example, when an operation of setting the same device tag to the field devices FD installed in different plants is performed, it is possible to generate a uniquely defined identification key for each field device FD by setting different pieces of plant information to respective field devices FD as a memo parameter. For this reason, it is possible to uniquely identify all the field devices of different plants and to collectively manage them. Incidentally, since there may be one memo parameter or a plurality of memo parameters used for the generation of an identification key, it is possible to generate an identification key in accordance with an operation mode of the field device FD by a user.

### [Second embodiment]

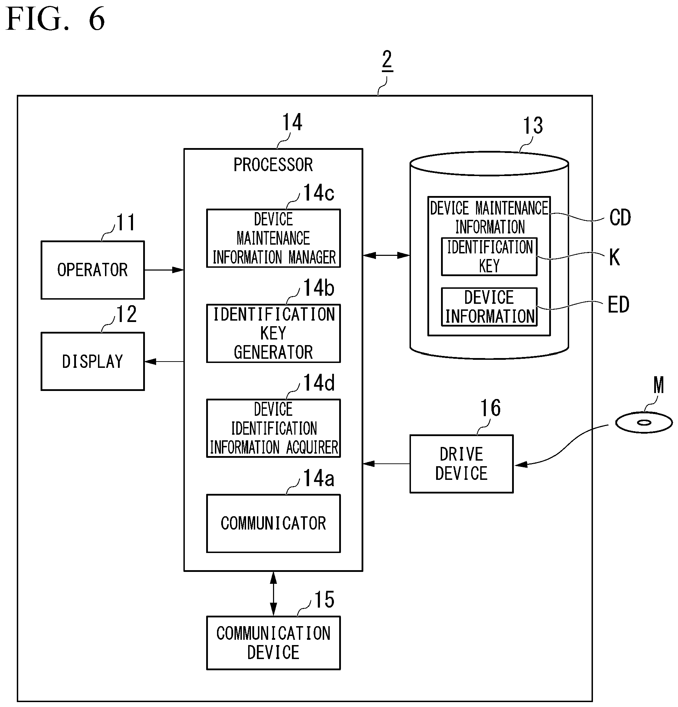

FIG. 6 is a block diagram which shows a configuration of a main part of a device management apparatus according to a second embodiment of the present invention. Components corresponding to those shown in FIG. 2 will be denoted by the same reference numerals in FIG. 6. As shown in FIG. 6, a device management apparatus 2 of the present embodiment has a configuration in which a device identification information acquirer 14d is added to the device management apparatus 1 shown in FIG. 2. The device management apparatus 2 having such a configuration may generate an identification key K using only a memo parameter instead of using a device tag and a model.

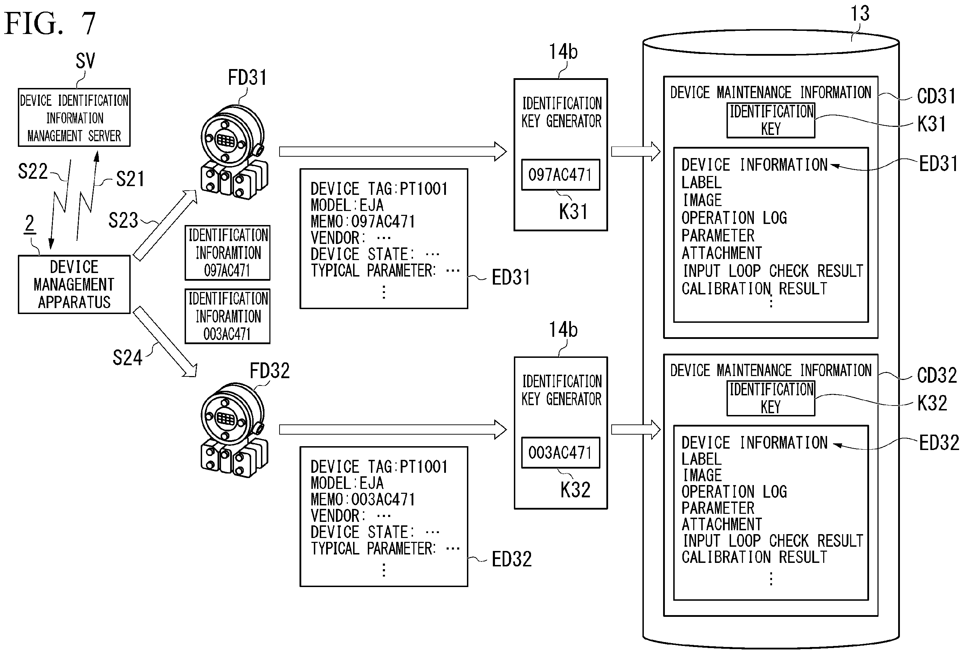

The device identification information acquirer 14d communicates with a device identification information management server SV (refer to FIG. 7) by controlling the communication device 15. This device identification information management server SV is a server that centrally manages identification information used to uniquely identify all the field devices FD (regardless of manufacturer). The device identification information acquirer 14d acquires uniquely defined identification information for each field device FD by communicating with the device identification information management server SV via the communicator 14a. The device identification information management server SV may be installed inside a plant or may also be installed outside the plant. That is, the installation position of the device identification information management server SV is not limited, and can be installed in an arbitrary position. The connection form between the device management apparatus 2 and the device identification information management server SV is arbitrary, and it may be, for example, a wired connection or a wireless connection. The device identification information management server SV may be realized by cloud computing.

FIG. 7 is a diagram for describing an example of the device management method according to the second embodiment of the present invention. The example shown in FIG. 7 is an example in which the same device tag "PT1001" is set in the same manner as in the examples shown in FIGS. 4 and 5, and device information ED31 and ED32 acquired from two field devices FD31 and FD32 having the same model of "EJA" are managed. However, in the present embodiment, unlike the example shown in FIGS. 4 and 5, memo parameters are not set in the field devices FD31 and FD32 in an initial state.

### (Device management method)

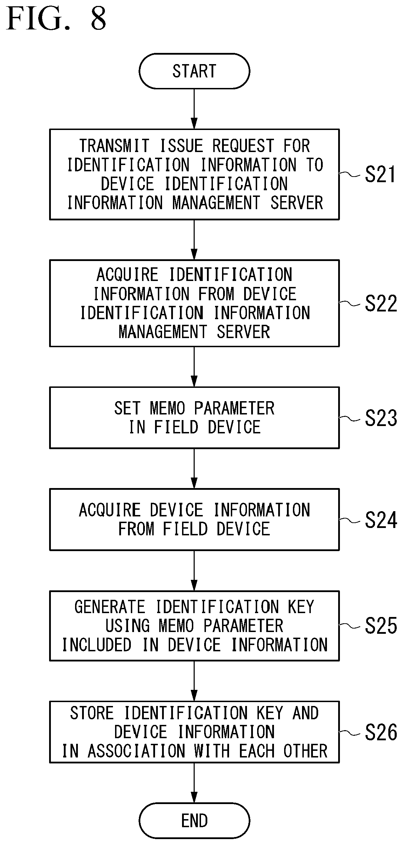

FIG. 8 is a flowchart which shows an overview of a device management method according to the second embodiment of the present invention. Hereinafter, the flowchart shown in FIG. 8 will be described with reference to the diagram shown in FIG. 7. Before the device information ED31 and ED32 stored in the field devices FD31 and FD32 are managed, an operator who operates the device management apparatus 2 first operates the operator 11, and performs acquisition instruction of identification information (first identification information) to be set as a memo parameter of the field device FD31 (a first field device). Then, the communication is performed between the device management apparatus 2 and the device identification information management server SV, and an issue request for identification information with respect to the field device FD31 is transmitted from the device management apparatus 2 to the device identification information management server SV under control of the device identification information acquirer 14d (step S21). When this issue request is received by the device identification information management server SV, processing of issuing identification information to the field device FD31 is performed in the device identification information management server SV. Here, issued identification information is uniquely defined identification information that does not overlap the identification information of all other field devices FD. The issued identification information is stored in a storage (not shown) of the device identification information management server SV, and is transmitted from the device identification information management server SV to the device management apparatus 2, and the device management apparatus 2 acquires the identification information (step S22).

If the identification information transmitted from the device identification information management server SV is received by the device management apparatus 2, and is acquired by the device identification information acquirer 14d, the identification information is set as a memo parameter in the field device FD31 by the device identification information acquirer 14d (step S23). In the example shown in FIG. 7, identification information indicating "097AC471" is set as the memo parameter in the field device FD31.

Similarly, an operator who operates the device management apparatus 2 operates the operator 11, and performs acquisition instruction of identification information to be set as a memo parameter of the field device FD32. Then, the communication between the device management apparatus 2 and the device identification information management server SV is performed, and an issue request for identification information with respect to the field device FD32 is transmitted from the device management apparatus 2 to the device identification information management server SV under the control of the device identification information acquirer 14d (step S21). If this issue request is received by the device identification information management server SV, processing of issuing identification information to the field device FD32 is performed in the device identification information management server SV. Here, issued identification information is uniquely defined identification information which does not overlap the identification information of all other field devices FD. The issued identification information is stored in a storage (not shown) of the device identification information management server SV, and transmitted from the device identification information management server SV to the device management apparatus 2, and the device management apparatus 2 acquires the identification information (step S22).

If the identification information transmitted from the device identification information management server SV is received by the device management apparatus 2, and is acquired by the apparatus identification information acquirer 14d, the identification information is set as a memo parameter in the field device FD32 by the device identification information acquirer 14d (step S23). In the example shown in FIG. 7, identification information indicating "003AC471" is set as the memo parameter in the field device FD32.

The above processing is performed, and accordingly, the device information ED31 stored in the field device FD31 includes the device tag "PT1001," the model "EJA," and the memo parameter "097AC471." The device information ED32 stored in the field device FD32 includes the device tag "PT1001," the model "EJA," and the memo parameter "003AC471."

Next, for example, when an operator who operates the device management apparatus 2 operates the operator 11 and gives an acquisition instruction of the device information ED stored in the field device FD, the device management apparatus 2 performs processing of acquiring the device information ED31 and ED32 stored in the field devices FD31 and FD32 (step S24). Next, the identification key generator 14b performs processing of generating an identification key K using the memo parameter included in the device information (step S25). Next, the identification key generator 14b performs processing of storing the generated identification key K and the device information ED acquired from the field device FD in association with each other in the storage 13 as device maintenance information CD (step S26). As shown in FIG. 7, the apparatus information ED31 stored in the field apparatus FD31 is acquired by the device identification information acquirer 14d of the apparatus management device 2, the identification key generator 14b of the device management apparatus 2 performs processing of generating an identification key K31 using only the memo parameter "097AC471." Then, the generated identification key K31 is associated with the device information ED31 and the accompanying information described above and stored in the storage 13 as device maintenance information CD31.

As shown in FIG. 7, when the device information ED32 stored in the field device FD32 is acquired by the device identification information acquirer 14d of the device management apparatus 2, the identification key generator 14b of the device management apparatus 2 performs processing of generating an identification key K32 using only the memo parameter "003AC471." Then, the generated identification key K32 is associated with the device information ED32 and the accompanying information described above to be stored in the storage 13 as device maintenance information CD32.

The device maintenance information CD31 is managed by the device maintenance information manager 14c using the identification key K31 generated using the uniquely defined memo parameter "097AC471." The device maintenance information CD32 is managed by the device maintenance information manager 14c using the identification key K32 generated using the uniquely defined memo parameter "003AC471." For this reason, even if the same device tag "PT1001" is set in the field devices FD31 and FD32, and the models are the same as "EJA," it is possible to individually manage the device information ED31 and ED32 obtained from the field devices FD31 and FD32 using different identification keys K31 and K32.

As described above, in the present embodiment, uniquely defined identification information transmitted from the device identification information management server SV is set in the field devices FD31 and FD32 as a memo parameter. Then, the identification keys K31 and K32 for identifying the device information ED31 and ED32 are generated using only memo parameters included in the device information ED31 and ED32 acquired from the field devices FD31 and FD32, and the generated identification keys K31 and K32 and the device information ED31 and ED32 are stored in association with each other. For this reason, even if when the same tag information is assigned to the different field devices FD31 and FD32, it is possible to generate a uniquely defined identification key, and to individually manage the device information ED31 and ED32 obtained from respective field devices FD31 and FD32.

As described above, the device management apparatus, the device management method, the device management program, the storage medium, and the device management system according to the embodiments of the present invention have been described, but the present invention is not limited to the embodiments described above, and changes can be freely made within the scope of the present invention. For example, in the first embodiment described above, plant information such as information for specifying a plant in which a field device is installed, or information indicating a location of a plant is used as a memo parameter, but the memo parameter may also be information other than the plant information. In other words, it is possible to use arbitrary information (for example, unique information different between plants) as a memory parameter.

A part or all of the processor 14 of the device management apparatus in the above-described embodiment may be implemented by a computer. In this case, a processing function thereof may be implemented by recording a part or all of a program for implementing the processing function on a computer-readable storage medium and causing a computer system to read and execute the program recorded on the storage medium.

The "computer system" described here is assumed to be a computer system embedded in the device management apparatus and include an operating system (OS) and hardware such as peripheral devices. The "computer-readable storage medium" refers to a storage device including a flexible disk, a magneto-optical disc, a read only memory (ROM), a portable medium such as a compact disc (CD)-ROM, and a hard disk embedded in the computer system.

Further, the "computer-readable storage medium" is assumed to include a computer-readable storage medium for dynamically holding a program for a short time as in a communication line when the program is transmitted via a network such as the Internet or a communication line such as a telephone line and a computer-readable storage medium for holding the program for a predetermined time as in a volatile memory inside the computer system including a server and a client when the program is transmitted. The above-described program may be used to implement some of the above-described functions. The above-described program may be used to implement the above-described functions in combination with a program already recorded on the computer system.

A part or all of the processor 14 of the device management apparatus in the above-described embodiment may be implemented as an integrated circuit such as large scale integration (LSI). Each of the functional blocks of the processor 14 may be individually formed as a processor or a part or all thereof may be integrated into a processor. A method of forming an integrated circuit is not limited to LSI, and may be implemented by a dedicated circuit or a general-purpose processor. When the technology of an integrated circuit with which LSI is replaced emerges with the advancement of semiconductor technology, the integrated circuit based on the technology may be used.

## Claims

1. A device management apparatus which manages at least one field device comprising:
a communicator configured to communicate with the field device to acquire device information, the device information including identification information for identifying the field device and at least one piece of additional information set in the field device;
a key generator configured to generate an identification key for identifying the device information using the identification information and the additional information included in the device information acquired by the communicator; and
a storage storing the identification key generated by the key generator and the device information in association with each other.

2. The device management apparatus according to claim 1, further comprising:
a manager configured to manage the device information stored in the storage using the identification key.

3. The device management apparatus according to claim 1 or claim 2, further comprising:
an operator operable by a user,
wherein the key generator is configured to generate the identification key using the additional information specified based on operation performed by the user on the operator among the additional information included in the device information.

4. The device management apparatus according to claim 3, wherein the key generator is configured to display on a display a list of the additional information usable for generation of the identification key among the additional information included in the device information, and generate the identification key using the additional information specified from the list based on the operation performed by the user on the operator.

5. The device management apparatus according to claim 1 or claim 2, wherein the key generator is configured to automatically specify the additional information used in the generation of the identification key among the additional information included in the device information.

6. The device management apparatus according to any one of claims 1 to 5,
wherein the identification information includes tag information arbitrarily set by a user, and
the additional information includes plant information on a plant in which the field device is installed.

7. The device management apparatus according to claim 6, wherein the tag information includes information for uniquely identifying each of a plurality of field devices installed in a single plant.

8. The device management apparatus according to claim 6 or claim 7, wherein the plant information includes at least one of first information for specifying a plant in which the field device is installed and second information for indicating a location of the plant in which the field device is installed.

9. The device management apparatus according to any one of claims 1 to 8, wherein the key generator is configured to:
determine whether the identification information included in the device information is information for uniquely identifying each of a plurality of field devices;
generate the identification key which is the identification information in a case in which the identification information is information for uniquely identifying each of the plurality of field devices; and
generate the identification key using the identification information and the additional information in a case in which the identification information is not information for uniquely identifying each of the plurality of field devices

10. The device management apparatus according to any one of claims 1 to 9, wherein the key generator is configured to generate the identification key using the identification information and a plurality of pieces of additional information.

11. The device management apparatus according to any one of claims 1 to 10, wherein the key generator is configured to:
generate the identification key which is the identification information in a case in which a field device for performing communication using a first communication protocol is identified; and
generate the identification key using the identification information and the additional information in a case in which a field device for performing communication using a second communication protocol is identified.

12. A device management method which manages at least one field device comprising:
communicating with the field device to acquire device information, the device information including identification information for identifying the field device and at least one piece of additional information set in the field device;
generating an identification key for identifying the device information using the identification information and the additional information included in the acquired device information; and
storing the generated identification key and the device information in association with each other.

13. A device management program which manages at least one field device, which when executed by a computer, causes the computer to perform;
communicating with the field device to acquire device information, the device information including identification information for identifying the field device and at least one piece of additional information set in the field device;
generating an identification key for identifying the device information using the identification information and the additional information included in the acquired device information; and
storing the generated identification key and the device information in association with each other.

14. A storage medium storing the device management program according to claim 13.

15. A device management system comprising:
a plurality of field devices; and
the device management apparatus according to any one of claims 1 to 11 which manages the plurality of field devices.
